# EUROPEAN PATENT SPECIFICATION

(11) **EP 0 779 496 B1**
(45) Date of publication and mention of the grant of the patent: **08.03.2000**
(21) Application number: 95119667.4
(22) Date of filing: 13.12.1995
(51) Int. Cl.: G01B 3/10

(54) **Tape measure with braking system**
Massband mit Bremssystem
Ruban de mesure avec système de freinage

(43) Date of publication of application: 18.06.1997
(73) Proprietor: Kyoto Measuring Instruments Corp., Kyoto 601 (JP)
(72) Inventor: Usami, Tsutomu, c/o Kyoto Measuring Instr. Corp., Minami-ku, Tokyo, 601 (JP)
(74) Representative: Grünecker, Kinkeldey, Stockmair & Schwanhäusser Anwaltssozietät

(56) References cited:
- FR-A- 727 712
- US-A- 3 318 550
- US-A- 4 907 348
- PATENT ABSTRACTS OF JAPAN vol. 012, no. 081 (M-676), 15 March 1988 & JP-A-62 222978 (NHK SPRING CO LTD), 30 September 1987,

## Description

### BACKGROUND OF THE INVENTION

The present invention relates to a tape measure which is capable of winding a measuring strip on a spring-driven reel in a housing.

Measuring strips made of steel, cloth, plastics or other material have been used for measurement of a length and a distance. Any conventional measuring strip is wound manually or automatically into a housing. A measuring strip of a self-winding tape measure has a concave sectional form and has the property of straightening itself when it is drawn out of the housing. A winding reel with a spring drive is used as a winding mechanism of the self-winding tape measure. Automatic winding of the measuring strip is performed by reversing the reel in the housing by the action of the spring whose force for returning to its original shape is stored while the measuring strip is drawn out of the housing.

The thus constructed winding mechanism of the self-winding tape measure uses a strong spring that can completely wind a measuring strip on the winding reel overcoming a friction force, and can also reserve a returning force to a certain extent. When the measuring strip is drawn by 3 meters out of the housing and then rewound, it may be very fast rewound by the strong spring force and be rebound, causing a danger of damaging the strip itself and user's body.

Japanese Publication No.58-15721 discloses a measure tape instrument wherein a winding reel is provided with a plate-weight that can enter into frictional engagement with a cylindrical surface of a brake drum by the action of a centrifugal force to prevent the winding reel from rotating at a speed over a certain dangerous limit.

The above-mentioned countermeasure is effective but causes an increase in the number of parts and requires an additional assembling work. There is also such a problem that, in case of rewinding a measuring strip upwardstretching from the housing, the weight of the strip may be added to a winding force and, therefore, a larger braking force is required, i.e., additional countermeasure is still needed.

An attempt was made to provide a guide portion that may have frictional contact with the circumference of a conventional type winding reel, but it resulted in that the reel was considerably loaded through the constant friction with the guide portion and could not smoothly wind a measuring strip thereon. Such a problem also arose that the winding reel was seized by the guiding portion with a dirt inclusion therebetween.

### SUMMARY OF THE INVENTION

It is an object of the present invention to provide a tape measure which has a self-winding mechanism that has a simple construction requiring no additional part and can prevent acceleration of rotation of its winding reel by frictional braking which can vary depending upon a direction of its housing.

It is another object of the present invention to provide a tape measure which is capable of setting a winding condition depending upon a direction of a housing because a supporting shaft is fitted with a play in a larger bearing bore of a winding reel.

It is another object of the present invention to provide a tape measure which, for instance, in drawing a measuring strip downward into the housing, is capable of obtaining a braking moment larger than that obtained when winding the measuring strip from any different direction.

It is another object of the present invention to provide a tape measure which has a supporting mechanism causing the winding reel to dance at an increased rotation speed, reducing its rotation speed by friction.

It is another object of the present invention to provide a tape measure wheel which has a winding reel with a bearing fitted with a clearance on a supporting shaft and has the housing with a formed therein guide portion with which projecting rims/circumferences of the winding reel can contact when the winding reel is eccentrically supported by the supporting shaft. This allows the winding reel to rotate at a safe speed by the effect of a friction force produced.

These objects are solved by a tape measure according to claim 1.

### BRIEF DESCRIPTION OF DRAWINGS

Fig. 1 is a plan view of a first embodiment of a measure tape, with an upper half of its housing removed for the sake of explanation, according to the present invention.

Fig. 2 is a plan view of the upper half of the housing of Fig. 1.

Fig. 3 is a sectional view taken along line A-A of Fig. 1.

Fig. 4 is a view for explaining a supporting shaft.

Fig. 5 is a plan view of an embodiment of the tape measure whose housing has an upper half removed for the shake of explanation of its state when winding a measuring strip in downward direction into the housing.

Fig. 6 is a sectional view taken along line B-B of Fig. 5.

Figs. 7A and 7B are views for explaining an example of application of another embodiment of a tape measure according to the present invention.

Figs. 8A and 8B are views for explaining another example of application of a second embodiment of a tape measure according to the present invention.

Figs. 9A and 9B are views for explaining an example of application of a third embodiment of a tape measure according to the present invention.

Figs. 10A and 10B are views for explaining another example of application of a third embodiment of a tape measure according to the present invention.

Fig. 11 is a plan view of an example of tape measure, with a removed upper half of its housing, which uses a long measure winding device embodying the present invention.

Fig. 12 is a plan view of the upper half of the housing of Fig. 11.

Fig. 13 is a sectional view taken on line C-C in Fig. 11.

Fig. 14 is a view showing the tape measure of Fig. 11 when winding an upward stretched measuring strip.

Fig. 15 is a sectional view taken on line D-D in Fig. 14.

Fig. 16 is a view showing the tape measure of Fig. 11 when winding a downward stretched measuring strip.

Fig. 17 is a view showing the tape measure of Fig. 11 when winding a horizontally stretched measuring strip.

Fig. 18 is another view showing the tape measure when winding a downward stretched measuring strip.

### DESCRIPTION OF THE PREFERRED EMBODIMENT

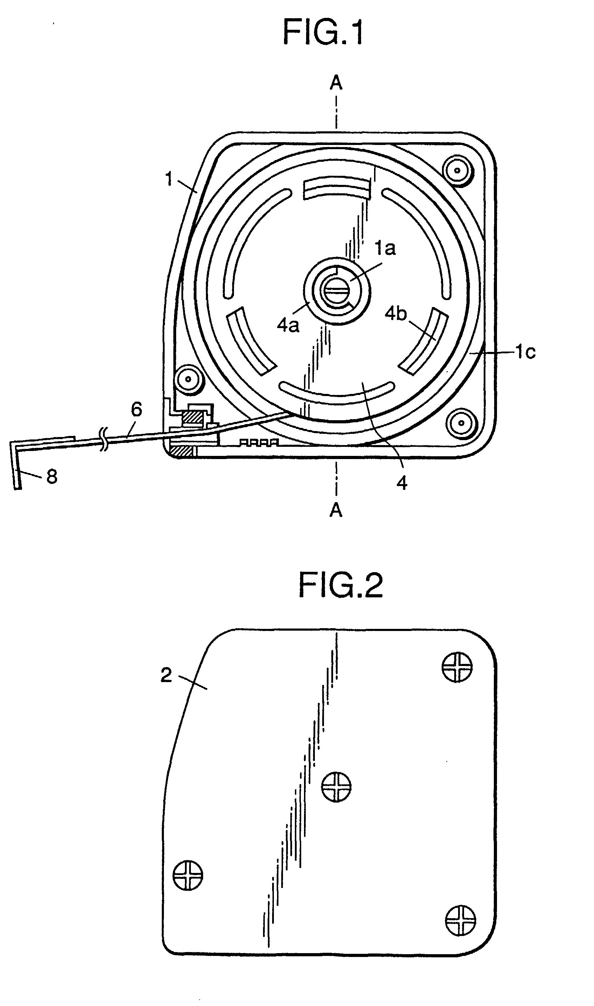

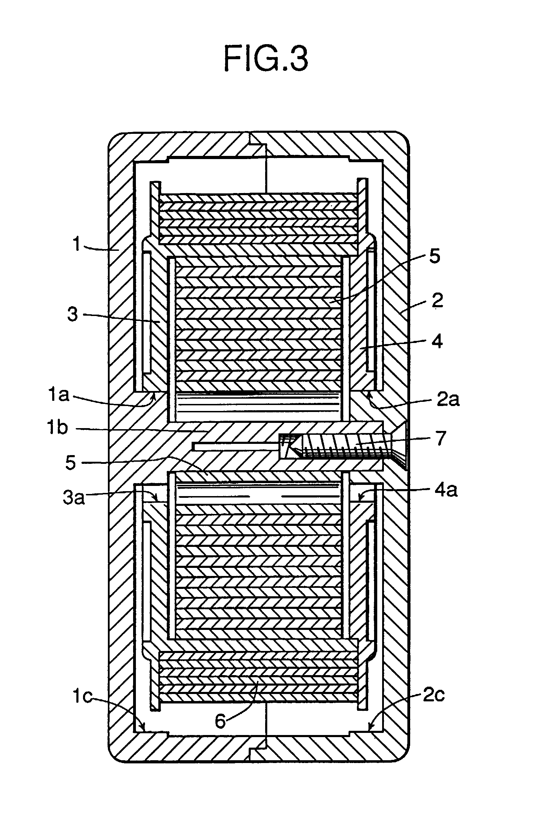

Figures 1 to 3 are views for explaining a first embodiment of a tape measure according to the present invention: Fig. 1 is a plan view of the tape measure with a removed upper half of its housing, Fig. 2 shows the removed upper half of the housing and Fig. 3 is a view taken on line A-A of Fig. 1. In Figs. 1 to 3, numeral 1 designates a lower half of a housing, 2 an upper half of the housing, 1a, 2a supporting shafts, 1b a mounting shaft, 1c, 2c guide portions, 3 a winding reel body, 4 a winding reel cover, 3a, 4a bearings, 4b a lug, 5 a driving spring, 6 a measuring strip, 7 a fixing screw and 8 an end hook.

The housing consists of the lower half 1 and the upper half 2. Two halves are fitted-on each other at their stepped peripheral edges. The lower half 1 of the housing is provided at its center portion with the mounting shaft 1b whose base is formed integrally with the supporting shaft 1a. The upper half 2 of the housing has, in its center portion, a hole for the fixing screw 7 and the supporting shaft 2a formed thereon. The lower and upper halves of the housing are connected with each other by screwing the fixing screw 7 from the upper half 2 into a threaded hole made at an end face of the mounting shaft 1b of the lower half 1. The lower half 1 has an integrally formed guide portion 1c arranged coaxially with the supporting shaft 1a thereof. The upper half 2 has the integrally formed guide portion 2c at a place opposite to the guide portion 1c of the lower half 1.

The winding reel body 3 and a winding reel cover 4 are connected with each other to form a winding reel. The bearing 3a formed in the winding reel body 3 and the bearing 4a formed in the winding reel cover 4 are rotatably fitted on respective supporting shafts 1a and 2a. The winding reel body 3 accommodates the driving spring 5 in its center cavity closed with the winding reel cover 4. The driving spring 5 is secured at its internal end to the mounting shaft 1b and at its external end to the winding reel body 3. The measuring strip 6 is secured at its inside end to the winding reel body 3 and is wound on an outer cylindrical surface of the winding reel body 3. A hook 8 is provided at an outside free end of the measuring strip 6 to prevent the free end of the measuring strip from being drawn into the housing (1, 2) and to engage with an object to be measured.

The measuring strip 6 marked off in units for measurement of a length is spirally wound on the outer cylindrical surface of the winding reel body 3. While the measuring strip 6 is drawn out of the housing (1, 2) by a necessary length, the driving helical spring 5 in the winding reel body 3 is stretched and stores returning force in it. After measurement, the measuring strip 6 is automatically rewound by the force of the spring 5.

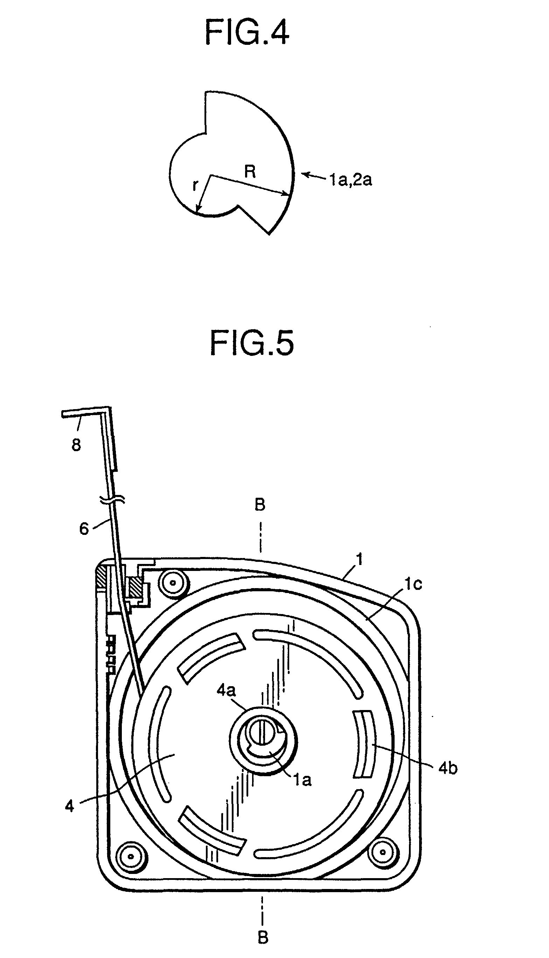

In the shown embodiment, the supporting shafts 1a and 2a are made in the form of two coaxial arcs of different radii in each cross section as shown in Fig. 4. There is shown a cross section of each shaft, which is formed by a combination of a small arc portion of smaller radius (r) and a large arc portion of larger radius (R).

In case of drawing the substantially horizontal measuring strip 6 into the housing, the bearings 3a and 4a are supported by large arc portions of the supporting shafts 1a and 2a respectively as shown in Figs. 1 and 3. The winding reel, therefore, is supported coaxially with the mounting shaft 1a at a low speed of its rotation without entering into contact of the projecting rims/circumferences of the winding reel body 3 and the winding reel cover 4 with the guide portions 1c and 2c, respectively, of the lower half 1 and the upper half 2 of the housing.

When the winding reel rotates faster with an increase of the number of turns of the measuring strip thereon, it starts dancing in the housing because its bearings 3a and 4a are fitted with a play on the supporting shafts 1a and 2a of non-circular section. The winding reel brings side surfaces of its body 3 and cover 4 into contact with inner surfaces of the lower half 1 and the upper half 2 respectively, and the projecting circumferences of its body 3 and cover 4 with the guide portions 1c and 2c, respectively, of the lower half 1 and the upper half 2 of the housing. The friction force acts on the winding reel to prevent the acceleration of the rotational movement of the winding reel.

It is also possible to form lugs 4b, as shown in Fig. 1, on the side surface of the winding reel cover 4, which may contact with an inside surface of the housing. The lugs may also be formed on the side surface of the winding reel body 3 or on both side surfaces of the winding reel body 3 and cover 4.

When the measuring strip is drawn into the upward directed housing, a winding speed may increase due to the effect of weight of the measuring strip.

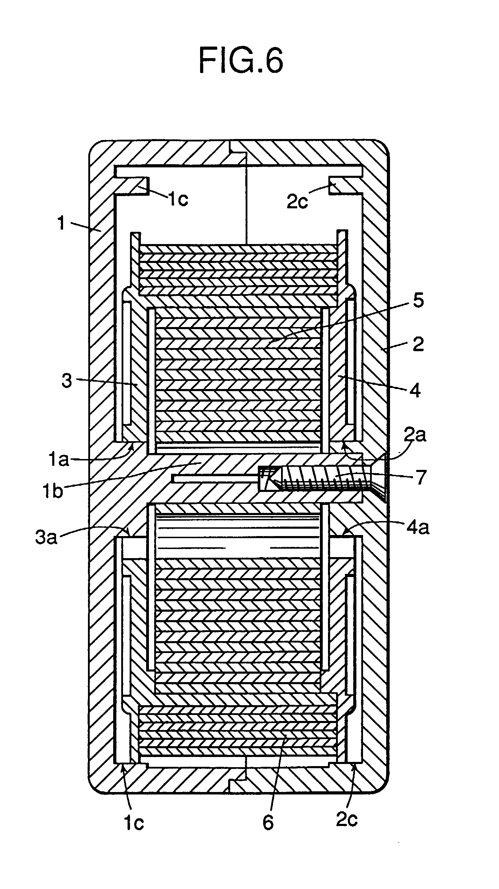

Figures 5 and 6 are views for explaining how to rewind an upward stretching measuring strip on a winding reel in a housing of a tape measure which is the same as described above with reference to Figs. 1 to 4. Fig. 5 is a plan view of the tape measure with a removed upper half of the housing and Fig. 6 is a sectional view taken along line B-B of Fig. 5. In Figs. 5 and 6, the same components as those shown in Figs. 1 and 3 are given the same reference numbers. In this case, bearings 3a and 4a of a winding reel are supported by small diameter portions of supporting shafts 1a and 2a respectively. The winding reel, therefore, takes a lower position than those shown in Figs. 1 and 3. Namely, the projecting circumferences of a winding reel body 3 and cover 4 are in contact with guide portions 1c and 2c, respectively, of a lower half 1 and an upper half 2 of a housing. To wind a measuring strip 6, the thus supported winding reel may start rotating with friction and may safely draw the measuring strip into the housing.

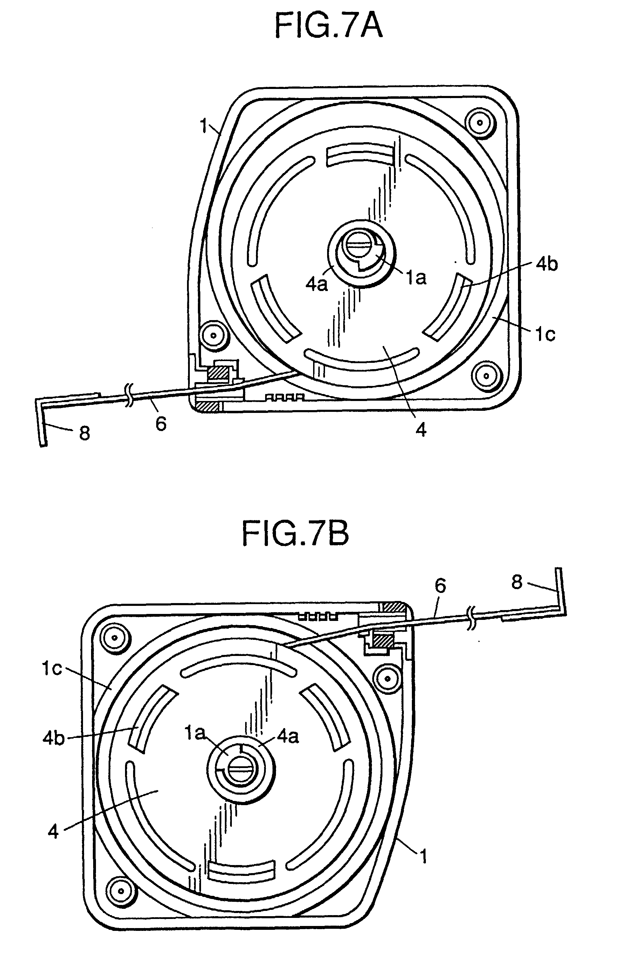

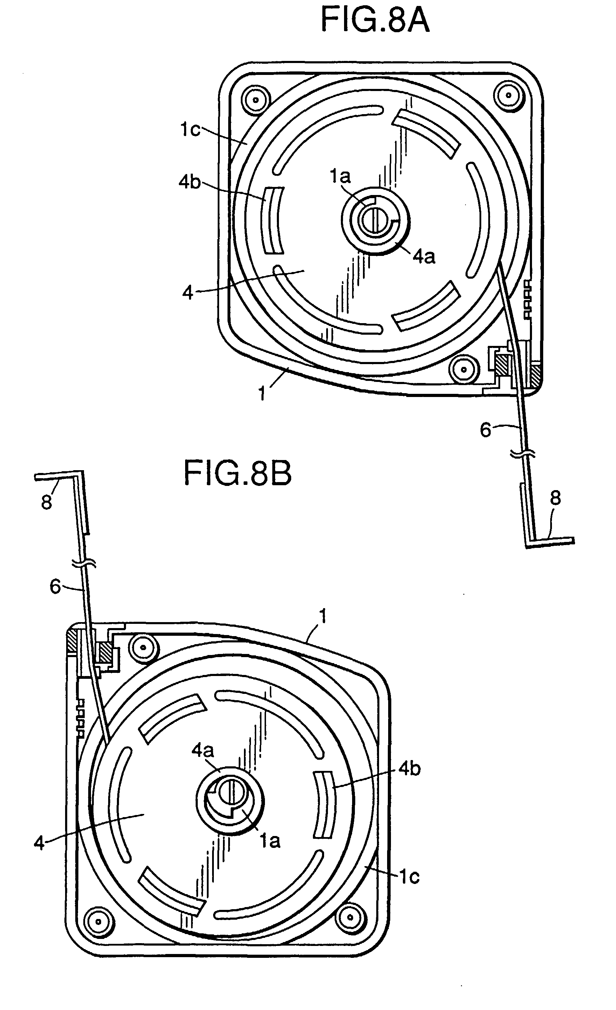

Figures 7A, 7B and 8A, 8B are views for explaining a second example of a tape measure embodying the present invention. The components similar to those shown in Figs. 1 to 6 are given the same reference numbers. In this embodiment, a supporting shaft 1a is similar in its shape to the shaft used in the first embodiment but differs therefrom by its mounting direction as apparent in comparison of Fig. 7A with Fig. 1. This specified supporting arrangement produces the following effects: In case of drawing a measuring strip 6 into a housing in a lower horizontal direction as shown in Fig. 7A or in a downward direction as shown in Fig. 8B, the projecting circumference of a winding reel cover 4 is in contact with a guide portion 1c and, therefore, the friction force may act on the winding reel as soon as the reel starts its rotational motion and prevent acceleration of the reel rotation, assuring safe winding of the measuring strip. In case of drawing a measuring strip 6 into a housing in an upper horizontal direction as shown in Fig. 7B or in an upward direction as shown in Fig. 8A, the projecting circumference of the winding reel cover 4 is not in contact with the guide portion 1c while the winding reel rotates at a low speed. When the winding reel rotates faster, it starts dancing intermittently bringing the projecting circumference and side lugs 4b of its cover 4 into contact with the guide portion 1c and the inside surface of the housing. The rotation speed of the reel is reduced by friction force acting thereon. Although the winding reel cover is described in the shown embodiment, it must be understood that the side portion (not shown) of the winding reel body can, of course, work similarly.

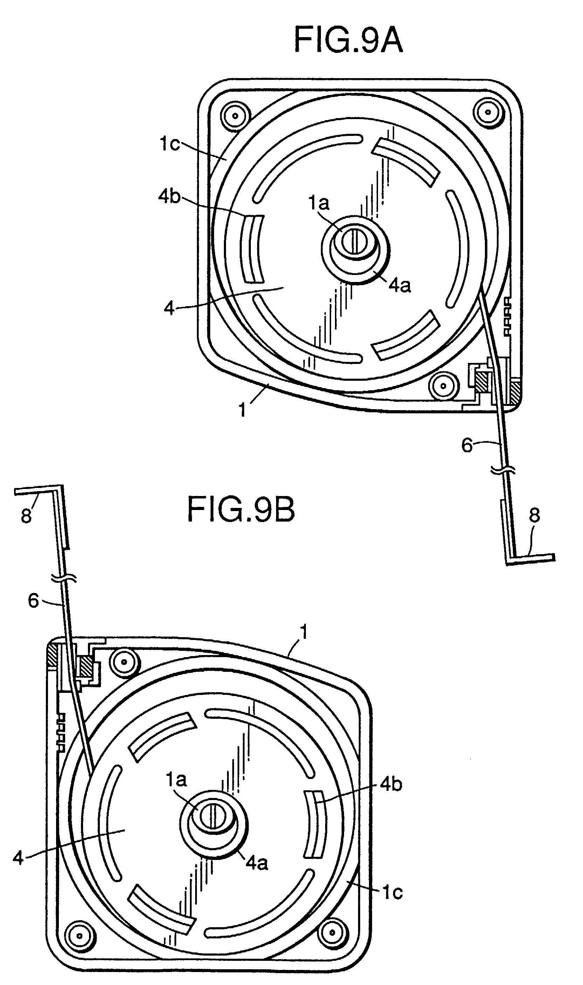

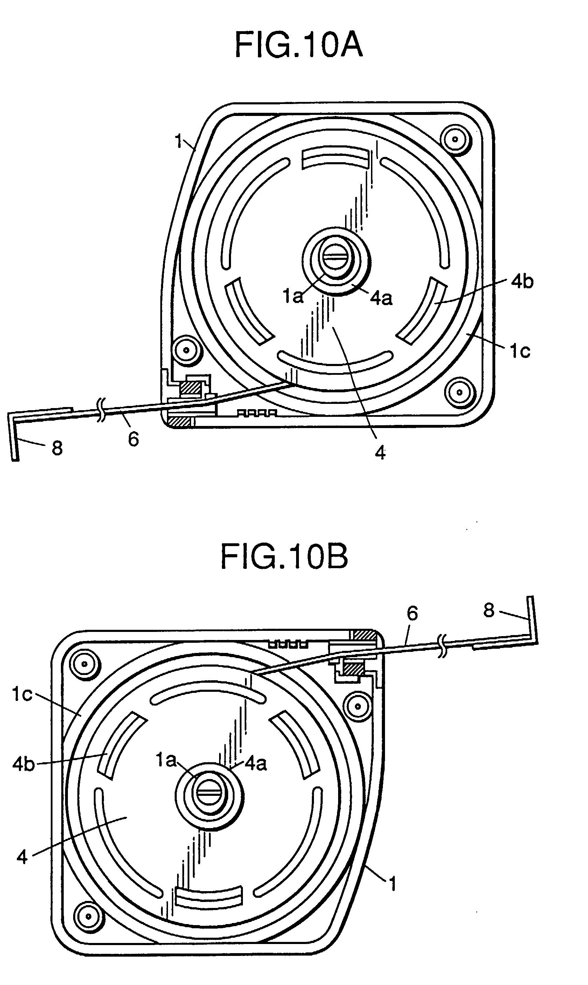

Figures 9A, 9B and 10A, 10B are views for explaining a third example of a tape measure embodying the present invention. The components similar to those shown in Figs. 1 to 6 are given the same reference numbers. This embodiment uses a supporting shaft 1a which has an oval sectional form and is mounted in an exemplified direction. The operation of the embodiment with the shown supporting shaft is as follows:

In case of drawing a measuring strip 6 downward (Fig. 9A) or upward (Fig. 9B) into a housing, the projecting circumference of a winding reel cover 4 is in contact with a guide portion 1c and, therefore, the friction force may act on the winding reel as soon as the reel starts its rotational movement and it may prevent acceleration of the reel rotation, assuring safe winding the measuring strip. In case of drawing a measuring strip 6 into a housing in an upper (Fig. 10A) or lower (Fig. 10B) horizontal direction, the projecting circumference of a winding reel cover 4 is not in contact with a guide portion 1c while the winding reel rotates at a low speed. When the winding reel rotates faster, it starts dancing, intermittently bringing the circumference and side lugs 4b of its cover 4 into contact with the guide portion 1c and the inside surface of the housing to reduce its rotation speed by friction force produced therebetween. Although the action of the winding reel cover is described in the shown embodiment, it must be understood that the side portion (not shown) of the winding reel body can, of course, work similarly.

It must be also understood that the sectional form of the supporting shaft is not limited to those of the shafts used in the above-mentioned embodiments but may be of any other suitable non-circular form. It is also possible to use a shaft being circular in section and having a diameter smaller than that of a bearing bore of the winding reel. For example, the supporting shaft having a circular section having a radius corresponding to the smaller radius of the shaft shown in Fig. 4 may be used. Even in this case, it is possible to cause a frictional braking force acting on the winding reel to vary depending upon the working direction of the housing by devising arrangement of the supporting shaft and position and form of the guide portion.

As is apparent from the foregoing, a tape measure according to the present invention is capable of producing a braking force adapted to working direction of its housing by virtue of an unique design that a supporting shaft is fitted with a play in a larger bearing bore of a winding reel to allow the winding reel to bring its projecting circumferences (rims) into contact or get out of contact with a guiding portion of the housing when winding a measuring strip.

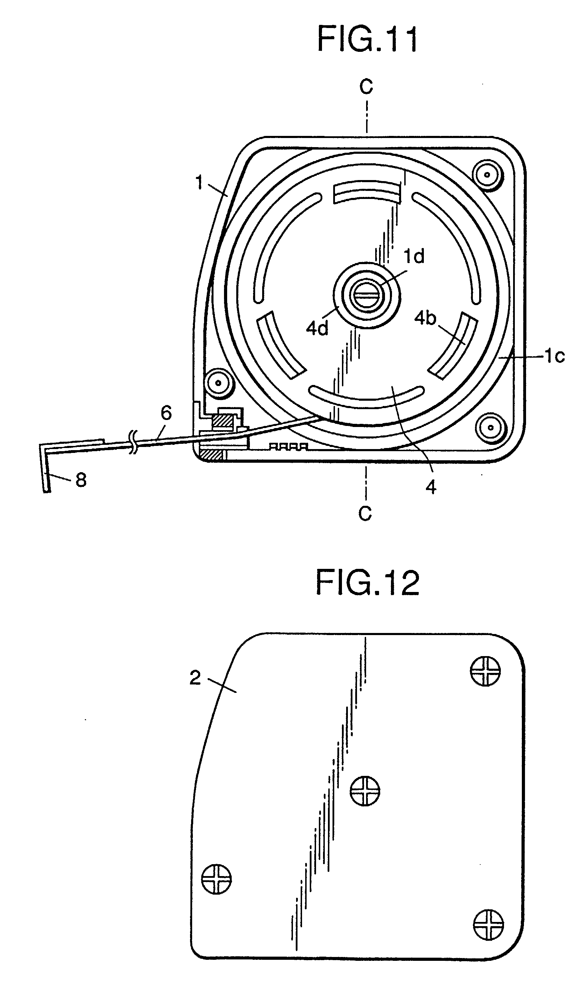

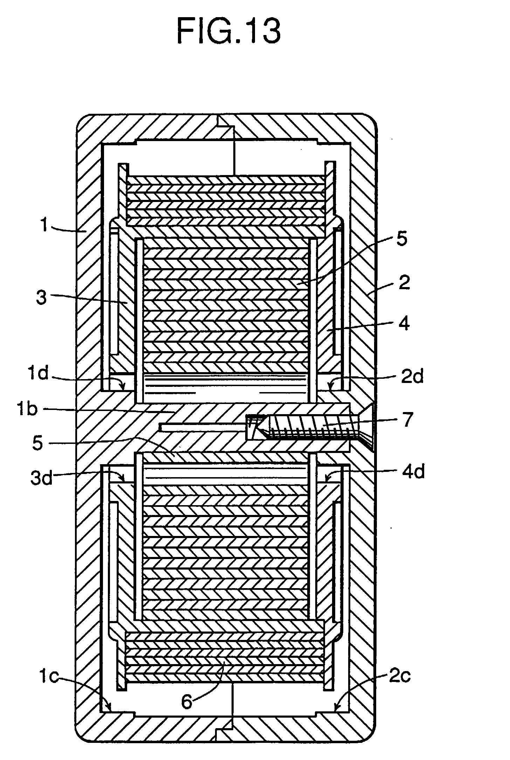

Figures 11 to 13 are views for explaining a further embodiment of a tape measure according to the present invention: Fig. 11 is a plan view of the tape measure with a removed upper half of its housing, Fig. 12 shows the removed upper half of the housing and Fig. 13 is a view taken on line C-C of Fig. 11. In Figs. 11 to 13, numeral 1 designates a lower half of a housing, 2 an upper half of the housing, 1d, 2d supporting shafts, 1b a mounting shaft, 1c, 2c guide portions, 3 a winding reel body, 4 a winding reel cover, 3d, 3d bearings, 4b a lug, 5 a driving spring, 6 a measuring strip, 7 a fixing screw and 8 an end hook.

The housing consists of the lower half 1 and the upper half 2. Two halves are fitted-on each other at their stepped peripheral edges. The lower half 1 of the housing is provided at its center portion with the mounting shaft 1b whose base is formed integrally with the supporting shaft 1d. The upper half 2 of the housing has, in its center portion, a hole for the fixing screw 7 and the supporting shaft 2d formed thereon. The lower and upper halves of the housing are connected with each other by screwing the fixing screw 7 from the upper half 2 into a threaded hole made at an end face of the mounting shaft 1b of the lower half 1. The lower half 1 has an integrally formed guide portion 1c arranged coaxially with the supporting shaft 1d thereof. The upper half 2 has the integrally formed guide portion 2c at a place opposite to the guide portion 1c of the lower half 1.

The winding reel body 3 and a winding reel cover 4 are connected with each other to form a winding reel. The bearing 3d formed in the winding reel body 3 and the bearing 4d formed in the winding reel cover 4 are rotatably fitted on respective supporting shafts ld and 2d. The winding reel body 3 accommodates the driving spring 5 in its center cavity closed with the winding reel cover 4. The driving spring 5 is secured at its internal end to the mounting shaft 1b and at its external end to the winding reel body 3. The measuring strip 6 is secured at its inside end to the winding reel body 3 and is wound on an outer cylindrical surface of the winding reel body 3. A hook 8 is provided at an outside free end of the measuring strip 6 to prevent the free end of the measuring strip from being drawn into the housing (1, 2) and to engage with an object to be measured.

The measuring strip 6 marked off in units for measurement of a length is spirally wound on the outer cylindrical surface of the winding reel body 3. While the measuring strip 6 is drawn out of the housing (1, 2) by a necessary length, the driving helical spring 5 in the winding reel body 3 is stretched and stores returning force in it. After measurement, the measuring strip 6 is automatically rewound by the force of the spring 5.

In the shown embodiment, the supporting shafts 1d and 2d have a diameter smaller than an inner diameter of the bearings 3d and 4d respectively. Therefore, when the winding reel is placed coaxially with a center axis, there is formed a ring clearance around the supporting shafts 1d and 2d in the bearings 3d and 4d.

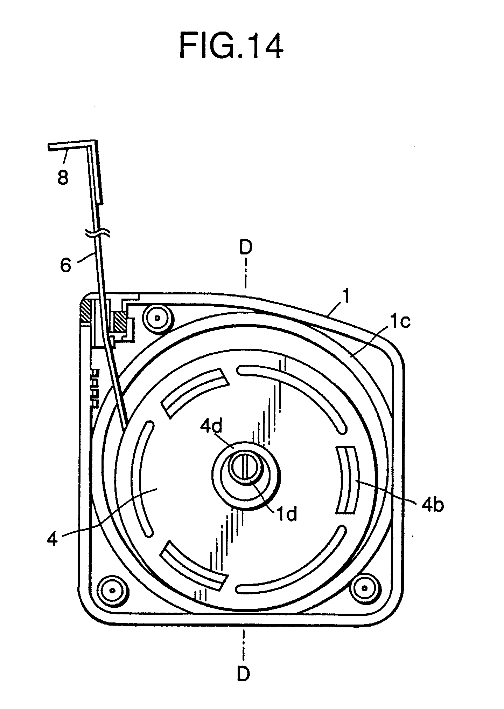

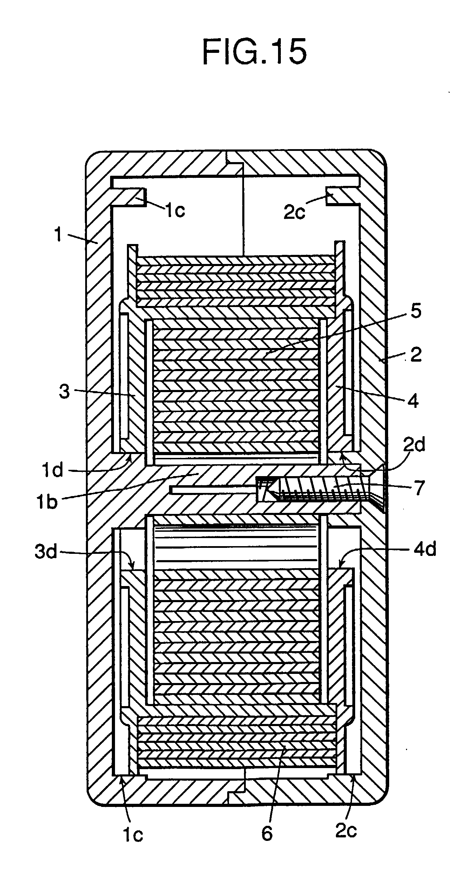

Figures 14 and 15 are views for explaining how to wind a vertically stretched measuring strip on a winding reel in a housing of the tape measure: Fig. 14 is a plan view of the tape measure with an upper half-housing removed and Fig. 15 is a sectional view taken along line D-D of Fig. 14. In Figs. 14 and 15, the same components as those shown in Figs. 11 and 13 are given the same reference numbers. In the shown case, bearings 3d and 4d by the action of the weight of a winding reel lie on supporting shafts 1d and 2d respectively. The winding reel, therefore, takes a lower position than those shown in Figs. 11 and 13. Namely, the projecting circumferences of the winding reel body 3 and cover 4 are in contact with guide portions 1c and 2c, respectively, of a lower half 1 and an upper half 2 of a housing. In this case, the winding reel may rotate all along with a friction force acting thereon and, therefore, may safely draw the measuring strip into the housing. There is no fear of seizing the winding reel on the guiding portions 1c and 2c even if dirt entered therebetween since the winding reel may dance in and along the clearance between the supporting shafts and the bearings.

The rotation speed of the winding reel can be limited by friction of its rims with guide portions of the housing. However, when the winding reel rotates faster for some reason or other with an increase of windings of the measuring strips thereon, the winding reel starts dancing in and along the clearance between the bearings 3d, 4d and the supporting shafts 1d, 2d and, at the same time, the side surfaces of its body 3 and cover 4 intermittently come into contact with the inside wall of the lower and upper halves 1 and 2 of the housing, keeping contact between its projecting circumferences and the guide portions 1c, 2c of the lower half 1 and the upper half 2 of the housing. This produces a larger braking force acting on the winding reel to reduce its rotation speed.

It is also possible to form lugs 4b, as shown in Fig. 11, on the side surface of the winding reel cover 4, which may contact with an inside surface of the housing. The lugs may also be formed on the side surface of the winding reel body 3 or on both side surfaces of the winding reel body 3 and cover 4.

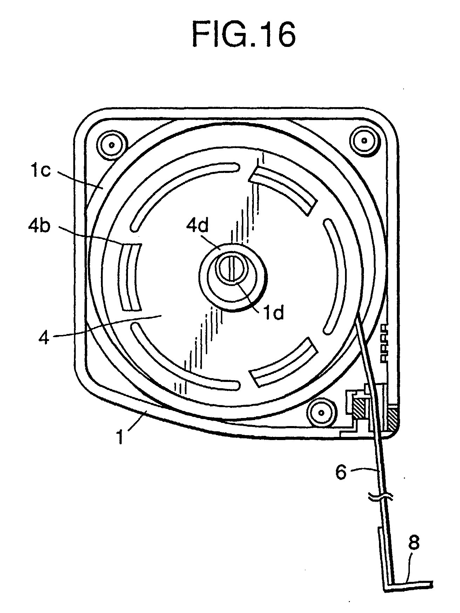

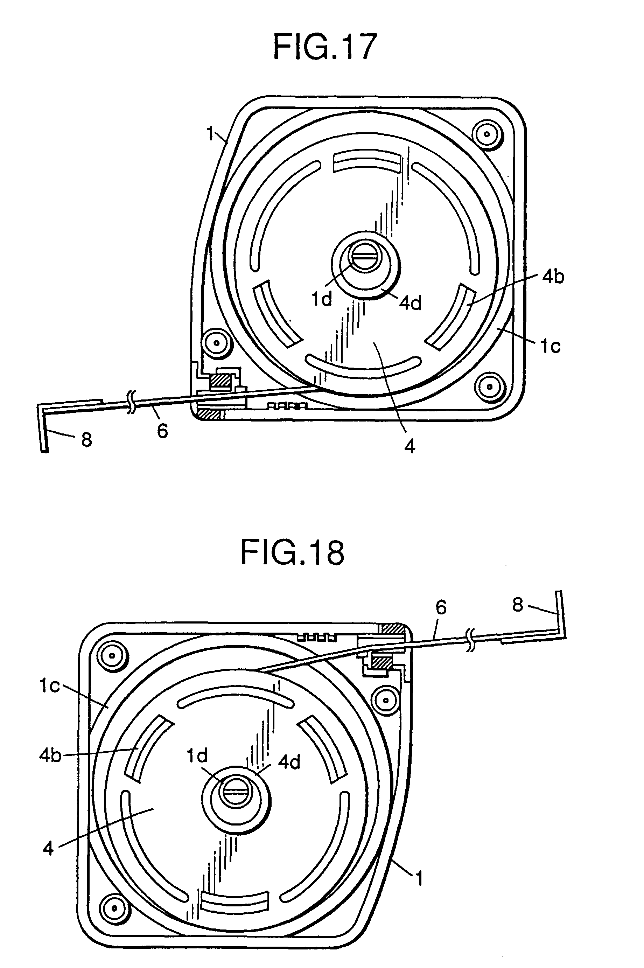

Figure 16 is a view for explaining the operation of a tape measure in case of drawing a measuring strip upward into the housing. Figures 17 and 18 show a tape measure in case of drawing a measuring strip horizontally into the housing. In every case, the winding reel by the action of its weight lies on the supporting shaft and takes a lower position than the cases shown in Figs. 11 and 13. Consequently, the projecting circumferences of the winding reel body 3 and cover 4 are in contact with guide portions 1c and 2c, respectively, of a housing. In this case, the winding reel may rotate with a friction force acting thereon, keeping a constant speed of its rotation. If the winding reel rotates faster for some reason or other, the winding reel starts dancing in and along to the clearance between the bearings 3d, 4d and the supporting shafts 1d, 2d and, at the same time, the projecting circumferences and the side surfaces of its body 3 and cover 4 come into contact with the guide portions 1c, 2c and the inside wall, respectively, of the lower half 1 and the upper half 2 of the housing. This produces a larger braking force acting on the winding reel which can reduce its rotation speed. The above-mentioned motions are the same as those described in cases of Figs. 14 and 15.

## Claims

1. A tape measure having a long measuring strip (6), comprising:
a housing formed of a lower (1) and an upper half (2);
supporting shafts (1a, 2a), formed in the center portions of the respective halves (1, 2) of the housing;
a mounting shaft (1b) provided at the center portion of the lower half (1) of the housing and the base of which is formed integrally with said supporting shaft (1a) and the top of which contacts the supporting shaft (2a) of the upper half (2) when in use;
a winding reel (3, 4) accommodating a winding spring (5) in its center cavity, said spring being secured to the mounting shaft (1b) at its internal end and to the winding reel (3, 4) at its external end for winding up the measuring strip (6) that is secured to the winding reel (3, 4) at its internal end, said winding reel (3, 4) having a bearing bore for fitting it onto said supporting shafts (1a, 2a) and rims projecting radially outward at the upper and lower edge of said winding reel (3, 4);
guide portions (1c, 2c) formed integrally with the respective halves (1, 2) of said housing and arranged coaxially with the supporting shafts (1a, 2a);
**characterized in that**
said bearing bore in the winding reel (3, 4) has a diameter that is larger than an outside diameter of said supporting shafts (1a, 2a) so that the supporting shafts (1a, 2a) are fitted with a play into said bearing bore and so that said projecting rims of the winding reel can frictionally contact said guide portions (1c, 2c) at some part of their circumference.

2. A tape measure according to claim 1, characterized in that said projecting rims can contact said guide portions (1c, 2c) at least when said tape measure is in such an orientation that the measuring strip (6) is drawn out in a upward direction.

3. A tape measure according to claim 1 or 2, characterized in that the supporting shaft (1a) has a non-circular sectional form.

4. A tape measure according to claim 3, characterized in that the supporting shaft (1a) has a sectional form of a combination of two arcs of different radii.

5. A tape measure according to claim 3, characterized in that the supporting shaft (1a) has an oval sectional form.

6. A tape measure according to any of the preceding claims, allowing eccentric movement of said winding reel (3, 4) about said supporting shafts (1a, 2a), so that said projecting rims can contact said guide portions (1c, 2c) when the winding reel (3, 4) is eccentrically supported by the supporting shaft (1a).

7. A tape measure according to claim 6, wherein, in use, eccentric movement occurs at particular orientations of said winding reel (3, 4), and/or at higher rotational speeds of said reel.

8. A tape measure according to any of the preceding claims, characterized in that said winding reel is formed of a winding reel body (3) and a winding reel cover (4).

## Revendications

1. Instrument de mesure à ruban possédant une bande de mesure de grande longueur (6), qui comprend :
un boîtier formé d'une moitié inférieure (1) et d'une moitié supérieure (2) ;
des arbres de support (1a, 2a), formés dans les portions centrales des moitiés respectives (1, 2) du boîtier ;
un arbre de montage (1b) prévu dans la portion centrale de la moitié inférieure (1) du boîtier et dont la base est formée en une seule pièce avec ledit arbre de support (la), et dont la partie supérieure entre en contact avec l'arbre de support (2a) de la moitié supérieure (2) pendant l'utilisation ;
une bobine d'enroulement (3, 4) logeant un ressort d'enroulement (5) dans sa cavité centrale, ledit ressort étant fixé à l'arbre de montage (1b) au niveau de son extrémité intérieure et à la bobine d'enroulement (3, 4) au niveau de son extrémité extérieure pour enrouler la bande de mesure (6) qui est fixée à la bobine d'enroulement (3, 4) à son extrémité intérieure, ladite bobine d'enroulement (3, 4) possédant un alésage de portée pour se monter sur lesdits arbres de support (1a, 2a) et des jantes saillantes radialement vers l'extérieur au bord supérieur et au bord inférieur de ladite bobine d'enroulement (3, 4) ;
des portions de guidage (1c, 2c) formées en une seule pièce avec les moitiés respectives (1, 2) dudit boîtier et agencées coaxialement aux arbres de support (1a, 2a) ;
caractérisé en ce que
ledit alésage de portée de la bobine d'enroulement (3, 4) a un diamètre qui est plus grand que le diamètre extérieur desdits arbres de support (1a, 2a), de sorte que les arbres de support (1a, 2a) sont montés avec jeu dans ledit alésage de portée et de sorte que ledites jantes saillantes de la bobine d'enroulement peuvent entrer en contact par frottement avec lesdites portions de guidage (1c, 2c) sur une certaine partie de leur circonférence.

2. Instrument de mesure à ruban selon la revendication 1, caractérisé en ce que lesdites jantes saillantes peuvent entrer en contact avec lesdites portions de guidage (1c, 2c) au moins lorsque ledit instrument de mesure à ruban est dans une orientation telle que la bande de mesure (6) est tirée en dehors dans une direction dirigée vers le haut.

3. Instrument de mesure à ruban selon la revendication 1 ou 2, caractérisé en ce que l'arbre de support (1a) a une forme de section non circulaire.

4. Instrument de mesure à ruban selon la revendication 3, caractérisé en ce que l'arbre de support (1a) a une forme de section faite d'une combinaison deux arcs de rayons différents.

5. Instrument de mesure à ruban selon la revendication 3, caractérisé en ce que l'arbre de support (1a) a une forme de section ovale.

6. Instrument de mesure à ruban selon une quelconque des revendications précédentes, permettant un mouvement excentrique de ladite bobine d'enroulement (3, 4) autour desdits arbres de support (1a, 2a), de sorte que lesdites jantes saillantes peuvent entrer en contact avec lesdites portions de guidage (1c, 2c) lorsque la bobine d'enroulement (3, 4) est supportée excentriquement par l'arbre de support (1a).

7. Instrument de mesure à ruban selon la revendication 6, dans lequel, en utilisation, un mouvement excentrique se produit dans des orientations particulières de ladite bobine d'enroulement (3, 4) et/ou à de grandes vitesses de rotation de ladite bobine.

8. Instrument de mesure à ruban selon une quelconque des revendications précédentes, caractérisé en ce que ladite bobine d'enroulement est formée d'un corps (3) de bobine d'enroulement et d'un couvercle (4) de bobine d'enroulement.

## Patentansprüche

1. Maßband, das ein langes Meßband (6) aufweist, mit:
einem aus einer unteren (1) und einer oberen Hälfte (2) gebildeten Gehäuse; und auf den zentralen Bereichen der jeweiligen Hälften (1, 2) des Gehäuses ausgebildeten Befestigungsstiften (1a, 2a);
einem Montierschaft (1b), der am zentralen Bereich der unteren Hälfte (1) des Gehäuses vorgesehen ist und dessen Basisbereich integral mit dem Befestigungsstift (1a) ausgebildet ist und dessen Oberseite mit dem Befestigungsstift (2a) der oberen Hälfte (2) während der Anwendung in Berührung ist;
einer Wickelspule (3, 4), die eine Wickelfeder (5) in ihrem zentralen Hohlraum beherbergt, wobei die Feder mit ihrem inneren Ende am Montierschaft (1b) und mit ihrem äußeren Ende an der Wickelspule (3, 4) befestigt ist, um das Meßband (6) aufzuwickeln, das mit seinem inneren Ende an der Wickelspule (3, 4) befestigt ist, und wobei die Wickelspule (3, 4) eine Lagerbohrung zur Aufnahme der Befestigungsstifte (1a, 2a) und radial nach außen vorstehende Ränder an der oberen und unteren Kante der Wickelspule (3, 4) aufweist;
integral mit den jeweiligen Hälften (1, 2) des Gehäuses ausgebildete Führungsbereiche (1c, 2c), die koaxial zu den Befestigungsstiften (1a, 2a) angeordnet sind;
**dadurch gekennzeichnet,** daß
die Lagerbohrung in der Wickelspule (3, 4) einen Durchmesser aufweist, der größer ist als ein Außendurchmesser der Befestigungsstifte (1a, 2a), so daß die Befestigungsstifte (1a, 2a) mit einem Spiel in die Lagerbohrung eingepaßt sind, und so daß die hervorstehenden Ränder der Wickelspule die Führungsbereiche (1c, 2c) an einem Teil ihres Umfangs reibend berühren können.

2. Das Maßband nach Anspruch 1, **dadurch gekennzeichnet,** daß die hervorstehenden Ränder die Führungsbereiche (1c, 2c) zumindest berühren können, wenn das Maßband so angeordnet ist, daß das Meßband (6) in einer nach oben gerichteten Richtung herausgezogen wird.

3. Das Maßband nach Anspruch 1 oder 2, **dadurch gekennzeichnet,** daß der Befestigungsstift (1a) eine nicht kreisförmige Querschnittsform aufweist.

4. Das Maßband nach Anspruch 3, **dadurch gekennzeichnet,** daß der Befestigungsstift (1a) eine Querschnittsform aus einer Kombination zweier Bögen mit unterschiedlichen Radien aufweist.

5. Das Maßband nach Anspruch 3, **dadurch gekennzeichnet,** daß der Befestigungsstift (1a) eine ovale Querschnittsform aufweist.

6. Das Maßband nach einem der vorhergehenden Ansprüche, das eine exzentrische Bewegung der Wickelspule (3, 4) um die Befestigungsstifte (1a, 2a) zuläßt, so daß die hervorstehenden Ränder die Führungsbereiche (1 c, 2c) berühren können, wenn die Wickelspule (3, 4) am Befestigungsstift (1a) exzentrisch befestigt ist.

7. Das Maßband nach Anspruch 6, wobei während der Anwendung in speziellen Orientierungen der Wickelspule (3, 4) und/oder bei höheren Rotationsgeschwindigkeiten der Wickelspule eine exzentrische Bewegung auftritt.

8. Das Maßband nach einem der vorhergehenden Ansprüche, **dadurch gekennzeichnet,** daß die Wickelspule aus einem Wickelspulenkörper (3) und einem Wickelspulendeckel (4) gebildet ist.
